# EUROPÄISCHE PATENTSCHRIFT

(11) **EP 1 343 667 B1**
(45) Veröffentlichungstag und Bekanntmachung des Hinweises auf die Patenterteilung: **21.01.2009**
(21) Anmeldenummer: 01271299.8
(22) Anmeldetag: 18.12.2001
(51) Int. Cl.: B60T 7/12

(54) **VERFAHREN UND SYSTEM ZUR ANFAHRUNTERSTÜTZUNG EINES KRAFTFAHRZEUGES**
METHOD AND SYSTEM FOR ASSISTANCE IN STARTING A MOTOR VEHICLE
PROCEDE ET SYSTEME D'ASSISTANCE AU DEMARRAGE D'UN VEHICULE AUTOMOBILE

(30) Priorität: 18.12.2000 DE 10063061
(43) Veröffentlichungstag der Anmeldung: 17.09.2003
(73) Patentinhaber: Lucas Automotive GmbH, 56070 Koblenz (DE)
(72) Erfinder: KINDER, Ralf, 56337 Eitelborn (DE); KLAPPER, Gerhard, 56154 Boppard (DE); SHOKOUFANDEH, Reza, Coventry CV3 6NY (GB); ENDRES, Franz-Josef, 56244 Sessenhausen (DE); LEITER, Ralf, 56179 Vallendar (DE); MAACK, Lorenz, 71032 Böblingen (DE); SÖNS, Andreas, 71120 Grafenau (DE); POERTZGEN, Gregor, 56068 Koblenz (DE)
(74) Vertreter: Schmidt, Steffen J.
(86) Internationale Anmeldenummer: PCT/EP2001/014947
(87) Internationale Veröffentlichungsnummer: WO 2002/049895

(56) Entgegenhaltungen:
- EP-A- 0 822 129
- DE-A- 19 849 799
- DE-A- 19 917 437
- DE-A- 19 925 249
- US-A- 4 717 207

## Beschreibung

### Gebiet der Erfindung

Die vorliegende Erfindung betrifft ein Verfahren und ein System zur Anfahrunterstützung eines Kraftfahrzeuges. Insbesondere betrifft die vorliegende Erfindung ein Verfahren und ein System, die beim Anfahren eines Kraftfahrzeuges eine im Stillstand des Kraftfahrzeuges aktivierte Bremsausrüstung so steuern, dass das Anfahren unterstützt und zugelassen wird.

### Hintergrund der Erfindung

Üblicherweise wird die Bremsausrüstung eines Kraftfahrzeuges oder Teile der Bremsausrüstung auch bei Stillstand des Kraftfahrzeuges betrieben, um dieses im Stillstand zu halten. Im allgemeinen wird hierfür eine Feststellbremseinrichtung, die typischerweise von einem Fahrzeugführer betätigt wird, oder eine Bremsausrüstung verwendet, die gesteuert für den Stillstand erforderliche Bremskräfte erzeugt.

Zum Anfahren des Kraftfahrzeuges ist es erforderlich, die im Stillstand erzeugten Bremskräfte abzubauen.

### Stand der Technik

Bei herkömmlichen von einem Fahrzeugführer zu bedienenden Feststellbremsen (Handbremsen) ist es erforderlich, dass der Fahrzeugführer neben den für ein Anfahren erforderlichen Maßnahmen auch Maßnahmen ergreift, um die Feststellbremse zu lösen.

Um einen Fahrzeugführer beim Anfahren eines Kraftfahrzeuges zu unterstützen, ist es aus der DE-OS-24 20 252 bekannt, die Feststellbremse eines Kraftfahrzeuges in Abhängigkeit einer Stellung eines Gaspedals zu deaktivieren. Hierbei wird die Feststellbremse, die im Stillstand eine fest vorgegebene Bremskraft erzeugt, deaktiviert, um die fest vorgegebene Bremskraft abzubauen, sobald das Gaspedal betätigt wird. Dies hat zur Folge, dass die Feststellbremse auch dann gelöst wird, wenn eine Betätigung des Gaspedals nicht zu einem Betriebszustand des Kraftfahrzeuges führt, der für ein Anfahren erforderlich ist. Dies ist beispielsweise der Fall, wenn das Fahrzeug nicht gestartet ist, die durch die Betätigung des Gaspedals verursachte Motordrehzahl oder das Motordrehmoment nicht ausreicht, um das Fahrzeug anzufahren, und dergleichen. Dementsprechend kann bei dieser bekannten Feststellbremse ein unerwünschtes Lösen oder ein Lösen der Feststellbremse auftreten, das es erforderlich macht, dass der Fahrzeugführer beim Anfahren des Kraftfahrzeuges zusätzliche Maßnahmen ergreifen muss, um unerwünschte Fahrzustände zu vermeiden.

Aus der DE 36 18 532 A1 ist eine Anfahrhilfe für ein Kraftfahrzeug an einer Steigung bekannt. Hierbei weist eine Bremsanlage ein zwischen dem Hauptbremszylinder und den Radbremszylindern angeordnetes Ventil auf, welches im Stillstand zur Aufrechterhaltung eines Bremsbetätigungsdruckes geschlossen ist und zur Aufhebung des Bremsbetätigungsdruckes geöffnet wird, um ein Anfahren des Kraftfahrzeuges zuzulassen. Wenn das Kraftfahrzeug aus dem Stillstand in einen Fahrzustand gebracht werden soll, wird überprüft, ob das von einem Fahrzeugführer vorgegebene Motordrehmoment einem für das Anfahren benötigten Anfahrdrehmoment entspricht. Hierbei wird das benötigte Anfahrdrehmoment in Abhängigkeit eines aktuellen Neigungswinkels des Fahrzeuges an einer Steigung und des Fahrzeuggewichtes ermittelt. Diese Vorgehensweise hat den Nachteil, dass das aktuelle Motordrehmoment, auch wenn es dem benötigten Anfahrdrehmoment entspricht, keine sicheren Aussagen darüber ermöglicht, ob sich das Kraftfahrzeug tatsächlich in einem für ein Anfahren erforderlichen Betriebszustand befindet. Dies ist beispielsweise der Fall, wenn die Kupplung betätigt oder kein Gang eingelegt ist. Wird in derartigen Fällen das benötigte Anfahrdrehmoment erreicht, wird trotzdem die Bremsanlage deaktiviert, wodurch sich das Kraftfahrzeug in unerwünschter Weise bewegen kann.

Alternativ ist es bei dieser Anfahrhilfe vorgesehen, auf Antriebsräder des Kraftfahrzeuges einwirkende Drehmomente zu erfassen. Wenn auf die Antriebsräder wirkende Drehmomente groß genug sind, um die von den Radbremszylindern erzeugten Bremsdrehmomente und das durch eine Steigung hervorgerufene Rückrolldrehmoment zu überwinden, wird das Ventil geöffnet, um den im Stillstand erzeugten Bremsbetätigungsdruck aufzuheben. Nachteilig ist hierbei, dass die zum Öffnen des Ventils erforderlichen Drehmomente der Antriebsräder zwar ausreichen können, um das Kraftfahrzeug, insbesondere an einer Steigung im Stillstand zu halten, aber nicht groß genug sind, um das Kraftfahrzeug tatsächlich aus dem Stillstand in einen Fahrzustand zu erbringen. Ein weiterer Nachteil besteht darin, dass bei dieser Vorgehensweise nicht überprüft wird, ob die auf die Antriebsräder wirkenden Drehmomente von dem Motor erzeugt werden oder auf andere Ursachen zurückzuführen sind. Solche nicht von dem Motor erzeugte auf die Antriebsräder wirkende Drehmomente können beispielsweise auftreten, wenn das an einer Steigung stehende Kraftfahrzeug beladen wird.

Ein allgemeiner Nachteil dieser Anfahrhilfe besteht darin, dass der durch das Öffnen des Ventils verursachte Abbau von im Stillstand aufgebrachten Bremskräften unabhängig von der Weise vorgenommen wird, in der das Kraftfahrzeug aus dem Stillstand bewegt werden soll. Dies kann zu nicht komfortablen ruckartigen Anfahrphasen führen, in denen es erforderlich sein kann, dass ein Fahrzeugführer zusätzliche Maßnahmen ergreifen muss, um das Anfahren des Kraftfahrzeuges in gewünschter Weise zu erreichen.

Das gattungsgäße Dokument EP-A-0 822 129 zeigt ein Verfahren zur Anfahrunterstützung eines Kraftfahrzeuges mit einer im Stillstand aktivierten Bremsausrüstung, mit folgenden Schritten: Ermitteln von Anfahrparametern, die einen Betriebszustand des Kraftfahrzeuges charakterisieren, in dem das Kraftfahrzeug aus einem Stillstandszustand in einen Fahrzustand gebracht werden soll; Ermitteln von aktuellen Betriebszuständen des Kraftfahrzeuges, bis ein Betriebszustand ermittelt wird, der durch eine Wirkverbindung zwischen einem Motor und Antriebsrädern des Kraftfahrzeuges verursacht wird; und Steuern einer im Stillstandszustand aktivierten Bremsausrüstung zum Abbau der im Stillstandszustand erzeugten Bremskräfte, um ein Anfahren des Kraftfahrzeuges zuzulassen.

### Aufgabe der Erfindung

Aufgabe der vorliegenden Erfindung ist es, ein Verfahren und ein System zur Anfahrunterstützung eines Kraftfahrzeuges mit einer im Stillstand aktivierten Bremsausrüstung bereitzustellen, die Übergänge von einem Stillstand in einen Fahrbetrieb unterstützen und komfortabler gestalten, wobei die oben aufgeführten Nachteile des Standes der Technik überwunden werden.

### Kurzbeschreibung der Erfindung

Zur Lösung dieser Aufgabe stellt die Erfindung ein Verfahren zur Anfahrunterstützung eines Kraftfahrzeuges mit den im Anspruch 1 definierten Sohritten bereit.

Im dem abhängigen Ansprüchen sind Ausgestalltungen definiert.

Ferner stellt die Erfindung ein System zur Anfahrunterstützung eines Kraftfahrzeuges bereit, das durch eine im Stillstand aktivierte Bremsausrüstung in diesem gehalten wird. Das erfindungsgemäße System umfasst eine Steuereinrichtung sowie mehrere Erfassungseinrichtungen (Sensoren) zur Erfassung von Betriebszustände des Kraftfahrzeuges charakterisierenden Parametern und eine Schnittstelle zur Steuerung der Bremsausrüstung, wobei die Steuereinrichtung unter Verwendung eines der zuvor genannten Verfahren betrieben wird.

Außerdem stellt die Erfindung ein Computerprogrammprodukt bereit, das Programmcodeteile umfasst, die eine Ausführung der zuvor genannten Verfahrensschritte erlauben.

### Kurzbeschreibung der Figuren

In der folgenden Beschreibung wird auf die beigefügten Figuren Bezug genommen, von denen zeigen:
- Fig. 1: eine schematische Darstellung eines erfindungsgemäßen Systems zur Anfahrunterstützung eines Kraftfahrzeuges,
- Fig. 2: ein Flußdiagramm einer Ausführungsform eines erfindungsgemäßen Verfahrens zur Anfahrunterstützung, und
- Fig. 3: ein Flußdiagramm einer weiteren Ausführungsform eines erfindungsgemäßen Verfahrens zur Anfahrunterstützung.

### Beschreibung bevorzugter Ausführungsformen

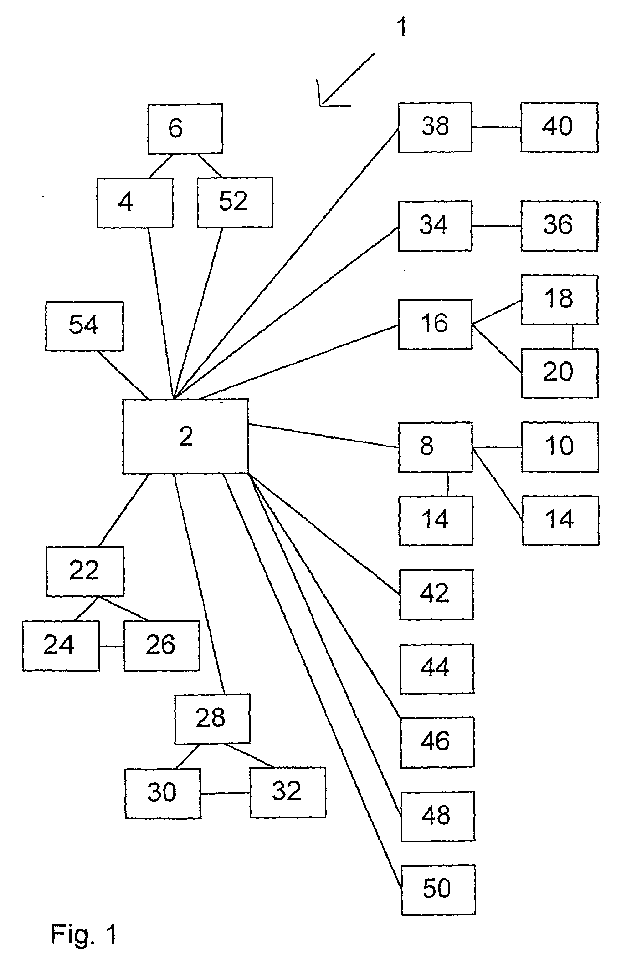

Das in Fig. 1 dargestellte System 1 zur Anfahrunterstützung kann eine separat ausgeführte Einrichtung eines Kraftfahrzeuges sein, wenigstens teilweise schon vorhandene Komponenten weiterer Systeme des Kraftfahrzeuges zu verwenden oder von einem System umfasst sein, das weitere Steuerungs- und Kontrollfunktionen für das Kraftfahrzeug bereitstellt.

Das System 1 zur Anfahrunterstützung weist eine Steuereinrichtung 2 auf, die über eine Schnittstelle 4 eine Bremsausrüstung 6 eines Kraftfahrzeuges steuert. Zur Steuerung der Bremsausrüstung 6 erfasst die Steuereinrichtung 2 mittels mehrerer im folgenden beschriebenen Einrichtungen, den aktuellen Betriebszustand des Kraftfahrzeuges und ermittelt aus von diesen Einrichtungen bereitgestellten Daten einen Betriebszustand für das Kraftfahrzeug, in den es unter Steuerung eines Fahrzeugführers gebracht werden soll.

Eine Sensoreinrichtung 8 ist mit einer Zündanlage 10 des Kraftfahrzeuges, Sensoren 12 zur Erfassung von Offen- und Geschlossenstellungen von Fahrzeugtüren und mit einer Sicherheitseinrichtung 14 verbunden, die zur Erkennung von Belegungen von Fahrzeugsitzen und von aktuellen Betriebszuständen von Schutzeinrichtungen für Fahrzeuginsassen (z.B. Airbags, Gurtsysteme) dient.

Eine Sensoreinrichtung 16 ist zur Erkennung von Stellungen und/oder Bewegungen eines Gaspedals 18 mit diesem und, falls vorhanden, mit einem Gaspedalschalter 20 verbunden, der überprüft, ob der Fahrzeugführer das Gaspedal 18 kontaktiert oder betätigt.

In vergleichbarer Weise ist eine Sensoreinrichtung 22 mit einem Bremspedal 24 und, falls vorhanden, mit einem Bremspedalschalter 26 verbunden, um Stellungen und/oder Bewegungen des Bremspedals 27 und dessen Betätigung zu ermitteln. Mit einer Sensoreinrichtung 28 wird ein aktueller Betätigungszustand eines Kupplungspedals 30 und optional eines Kupplungspedalschalters 32 erfasst.

Um festzustellen, ob und welcher Gang eingelegt ist, ist eine Sensoreinrichtung 34 mit einem Getriebe 36 verbunden. Eine Sensoreinrichtung 38 dient zur Erfassung von Parametern, die den aktuellen Betriebszustand eines Motors 40 charakterisieren.

Ferner ist die Steuereinrichtung 2 mit einem Temperatursensor 42 zur Erfassung der Umgebungstemperatur, einem Geschwindigkeitssensor 44 zur Erfassung der aktuellen Fahrzeuggeschwindigkeit mit einem Fahrzeugneigungssensor 46 zur Erfassung der aktuellen Neigung des Kraftfahrzeuges in aktuellen Neigung des Kraftfahrzeuges in dessen Längsrichtung, Sensoren 48 zur Erfassung der Drehzahlen einzelner oder mehrerer Fahrzeugräder und einem Gewichtssensor 50 zur Erfassung eines aktuellen Fahrzeuggewichtes verbunden. Außerdem erfasst die Steuereinrichtung 2 über eine Bremsensensoreinrichtung 52 den aktellen Betriebszustand der Bremsausrüstung 6.

Über eine Schnittstelle 54 empfängt die Steuereinrichtung 2 von weiteren Komponenten (nicht gezeigt) des Kraftfahrzeuges bereitgestellte Daten, die zusätzlich zu den oben genannten Betriebsgrößen weitere Informationen über den Zustand des Fahrzeuges liefern. Beispiele hierfür sind Informationen, die fehlerfreie und/oder fehlerhafte Betriebszustände eines Fahrzeugmotormanagementsystems, eines Antiblockiersystems (ABS) und von Systemen zur Traktions- und Stabilitätskontrolle (z.B. ESP, ASR, ASD) charakterisieren den Reifenluftdruck einzelner oder mehrerer Reifen und verfügbare Mengen an Betriebsstoffen (z.B. Getriebeöl, Motoröl) angeben. Ferner ist es über die Schnittstelle 54 möglich, ob das Kraftfahrzeug mit einem Anhänger (z.B. Wohnwagen) verbunden ist, und Parameter zu erfassen, die den aktuellen Betriebszustand des Anhängers charakterisieren.

Das System 1 zur Anfahrunterstützung ist für Fahrzeuge mit herkömmlichen Schaltgetrieben, Automatikgetrieben und halbautomatischen Getrieben geeignet. Bei der Verwendung des Systems 1 in Verbindung mit einem automatischen oder einem halbautomatischen Getriebe ist, im Gegensatz zur Verwendung mit einem Schaltgetriebe, die Sensoreinrichtung 28 anstelle des Kupplungspedalschalters 32 mit einem Kupplungsschalter (nicht gezeigt) verbunden. Die Verbindung der Sensoreinrichtung 28 mit einem Kupplungspedal ist in diesen Fällen nicht möglich.

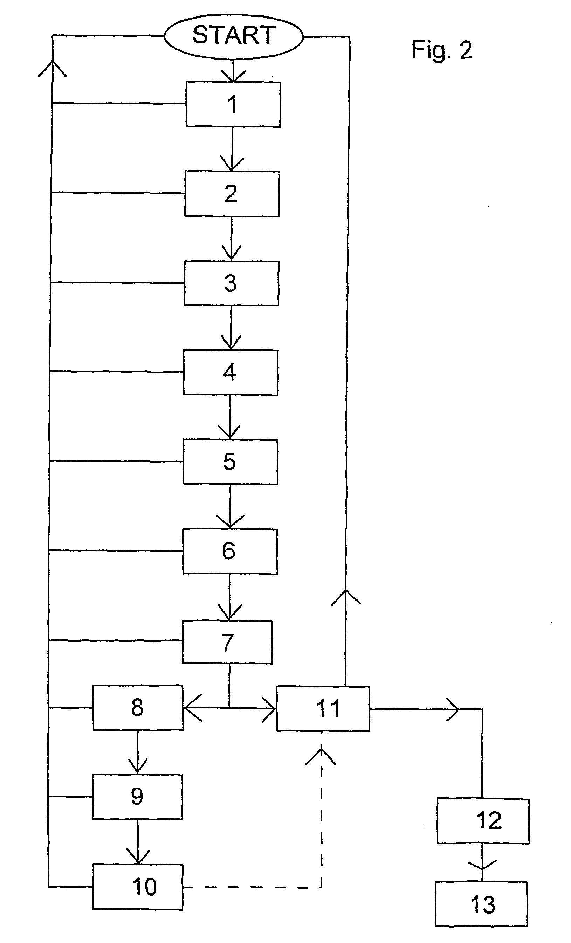

Unter Bezugnahme auf das in Fig. 2 dargestellte Flußdiagramm wird der Betrieb des Systems 1 zur Anfahrunterstützung bei einem Kraftfahrzeug mit einem herkömmlichen Schaltgetriebe beschrieben.

Wie eingangs erläutert, erzeugt die Bremsausrüstung 6 im Stillstand des Kraftfahrzeuges selbständig, automatisch Bremskräfte, die erforderlich sind, um das Kraftfahrzeug im Stillstand zu halten. Dementsprechend sind beim Anfahren des Kraftfahrzeuges, d.h. bei einem Übergang aus dem Stillstand in einen Fahrzustand, die im Stillstand erzeugten Bremskräfte abzubauen.

In Schritt 1 wird überprüft, ob die Bremsausrüstung 6 Bremskräfte erzeugt, um das Kraftfahrzeug im Stillstand zu halten. Wird hier festgestellt, dass die Bremsausrüstung 6 nicht aktiviert ist, d.h. keine Stillstandsbremskräfte erzeugt, was beispielsweise auf einen fehlerhaften Betriebszustand der Bremsausrüstung 6 oder eine manuelle Deaktivierung der Bremsausrüstung 6 durch einen Fahrzeugführer zurückzuführen ist, sind die im folgenden beschriebenen Schritte zum Abbau von durch die Bremsausrüstung 6 erzeugten Bremskräfte nicht erforderlich. Dementsprechend wird hier das Verfahren (der Programmablauf) zur Steuerung des Systems 1 beendet.

Ebenso endet das Verfahren, wenn in Schritt 2 festgestellt wird, dass die Zündanlage 10 nicht eingeschaltet ist, wenn in Schritt 3 mittels des Geschwindigkeitsensors 44 eine Fahrzeuggeschwindigkeit detektiert wird, oder wenn in Schritt 4 festgestellt wird, dass das Kupplungspedal 30 und/oder, falls vorhanden, der Kupplungspedalschalter 32 nicht betätigt sind.

In Schritt 2 wird überprüft, ob die Zündanlage 10 eingeschaltet ist. Hierbei kann überprüft werden, ob die Zündanlage 10 einen Start des Motors 40 bewirkt hat, d.h. der Motor 40 läuft, oder sich die Zündanlage 10 beispielsweise aufgrund einer detektierten Zündschlüsselstellung in einem Zustand befindet, der einen Start des Motors 40 zuläßt. Der letzte Fall einer Überprüfung der Zündanlage 10 ist insbesondere bei Kraftfahrzeugen ausreichend, bei denen im Stillstand der Motor 40 automatisch abgeschaltet und beispielsweise durch Betätigung des Gaspedals 18 automatisch gestartet wird, wenn sich der Zündschlüssel in einer entsprechenden Stellung befindet.

Wird in den Schritten 2 und 3 festgestellt, dass die Zündanlage 10 eingeschaltet ist bzw. das Kraftfahrzeug keine Geschwindigkeit aufweist, wird in Schritt 4 die beim Anfahren eines Kraftfahrzeuges mit einem Schaltgetriebe erforderliche Betätigung einer Kupplung (nicht gezeigt) überprüft. Ist diese Überprüfung ebenfalls erfolgreich abgeschlossen, sind die Basisbedingungen erfüllt, die für eine Steuerung der Bremsausrüstung 6 zur Anfahrunterstützung erforderlich sind. In den im folgenden beschriebenen Schritten werden aktuelle Betriebszustände und von dem Fahrzeugführer gewünschte Betriebszustände für das Kraftfahrzeug ermittelt, um die Bremsausrüstung 6 beim Anfahren des Kraftfahrzeuges entsprechend zu steuern.

In Schritt 5 wird der Zustand des Gaspedals 18 und, falls vorhanden, des Gaspedalschalters 20 überprüft. Wenn hier festgestellt wird, dass das Gaspedal 18 aus seiner Ruhestellung bewegt ist (und, optional, der Gaspedalschalter 20 eine Gaspedalbedienung anzeigt) geht die Steuerung zu Schritt 6 über. Ferner ist es vorgesehen, in Schritt 5 die Art der Bewegung des Gaspedals aus seiner Ruhestellung, d.h. die Geschwindigkeit, mit der das Gaspedal aus der Ruhestellung bewegt wird, zu ermitteln. Die Erfassung der Gaspedalbewegung, die die Weise charakterisiert, in der der Fahrzeugführer anfahren möchte, kann dann verwendet werden, um den Abbau der von der Bremsausrüstung 6 im Stillstand erzeugten Bremskräfte entsprechend zu steuern, falls weitere im folgenden erläuterten Bedingungen erfüllt sind. Bei einer fehlgeschlagenen Überprüfung in Schritt 5 geht die Steuerung zu Schritt 1 zurück.

In Schritt 6 wird das Übersetzungsverhältnis des Getriebes 36 ermittelt, um festzustellen, ob dieses für ein Anfahren des Kraftfahrzeuges geeignet ist. Üblicherweise wird diese Überprüfung erfolgreich abgeschlossen, wenn das Übersetzungsverhältnis des Getriebes 36 angibt, dass der erste Gang oder der Rückwärtsgang eingelegt ist. Vorteilhafterweise sollte auch ein Übersetzungsverhältnis für den zweiten Gang zu einer erfolgreichen Überprüfung führen, da insbesondere bei einer Fahrbahnoberflächenbeschaffenheit mit niedrigen Reibungswerten (z.B. schneebedeckte Fahrbahnen, Glatteis) häufig der zweite Gang zum Anfahren benutzt wird.

In Schritt 7 wird die aktuelle Motordrehzahl und das aktuelle Motordrehmoment ermittelt. Hier wird überprüft, ob die aktuelle Motordrehzahl größer als die für den Motor 40 vorgegebene Leerlaufdrehzahl, das aktuelle Motordrehmoment größer als ein vorgegebenes Motordrehmoment im Leerlauf, und das von dem Fahrzeugführer durch Betätigung des Gaspedals 18 gewünschte Motordrehmoment gleich oder größer als das aktuelle Motordrehmoment sind.

Bei dem Vergleich der aktuellen Motordrehzahl mit der vorgegebenen Leerlaufdrehzahl ist es vorteilhaft, wenn mittels des Temperatursensors 42 die Umgebungstemperatur erfasst wird, um temperaturabhängige Einflüsse auf die Motordrehzahl zu berücksichtigen. Auf diese Weise ist es möglich, bei niedrigen Außentemperaturen, die im allgemeinen zu einer erhöhten Leerlaufdrehzahl führen, die Überprüfung der aktuellen Motordrehzahl entsprechend durchzuführen. Vergleichbar zu Schritt 5, kann hier auch die Zunahme des Motordrehmoments ermittelt werden, um festzustellen, ob die Zunahme gleich oder größer als Null ist. Wie bei der Erfassung von Gaspedalbewegungen kann die Motordrehmomentzunahme beim Abbau der Stillstandsbremskräfte der Bremsausrüstung 6 verwendet werden.

Wenn die genannten drei (vier) Bedingungen erfüllt sind, die erforderlich sind, um den Anfahrwunsch des Fahrzeugführers zu erkennen, werden in den folgenden Schritten Parameter/Größen überprüft, die den aktuellen Betriebszustand des Kraftfahrzeuges charakterisieren.

In Schritt 8 wird das aktuelle Motordrehmoment mit einem Wert verglichen, der das für den Leerlauf vorgegebene Motordrehmoment und Korrekturfaktoren wiedergibt. Bei diesem Vergleich wird überprüft, ob das aktuelle Motordrehmoment tatsächlich ausreicht, um das Fahrzeug aus dem Stillstand anzufahren. Hierfür wird mittels des Fahrzeugneigungssensors 46 ermittelt, ob sich das Kraftfahrzeug an einer Steigung oder einem Gefälle befindet, wobei optional mittels des Gewichtssensors 50 das vorliegende Fahrzeuggewicht und/oder über die Schnittstelle 52 das Gewicht eines mit dem Kraftfahrzeug verbundenen Anhängers festgestellt werden können. Aus dieser(n) Information(en) werden die Korrekturfaktoren berechnet.

Nach einer erfolgreichen Überprüfung in Schritt 8 wird in Schritt 9 ermittelt, ob das aktuelle Motordrehmoment oder das von dem Fahrzeugführer gewünschte Motordrehmoment zunimmt.

Ist dies der Fall, wird in Schritt 10 überprüft, ob sich die Kupplung (nicht gezeigt) des Kraftfahrzeuges in einem Zustand befindet, der eine Kraftübertragung von dem Motor 40 zu den Rädern ermöglicht. Hierfür wird eine zeitlich gemittelte Zunahme des Motordrehmoments erfasst, wobei diese Überprüfung erfolgreich abgeschlossen wird, wenn die mittlere Drehmomentzunahme während einer vorgegebenen Zeitperiode (z.B. etwa 4 Millisekunden) in einem vorgegebenen Bereich liegt, z.B. zwischen 1% und 60% beträgt.

Alternativ zu den Schritten 8, 9 und 10 ist es vorgesehen, in Schritt 11 zu überprüfen, ob sich die mittels des Fahrzeugneigungssensors 46 erfasste Neigung gegenüber der nach den Schritten 4 bis 7 vorliegenden Fahrzeugneigung (d.h. nach der Erkennung des Anfahrwunsches) um einen vorgegebenen Betrag geändert hat. So wird beispielsweise in Schritt 11 die Überprüfung erfolgreich abgeschlossen, wenn sich die hier erfasste Neigung gegenüber der Neigung des Kraftfahrzeuges bei der Erkennung des Anfahrwunsches um 5 % vergrößert hat. Alternativ kann in Schritt 11 anstelle der Neigung die aktuelle Neigungsänderung mit Neigungsänderungen bei den Schritten 4 bis 7 verglichen werden.

Während in den Schritten 8, 9 und 10 die Reaktion des Motors 40 auf das Greifen der Kupplung, d.h. die Gradientenänderung der Kurve für die Motordrehzahl, bei gleichzeitiger Erhöhung des Motordrehmomentes erkannt wird, wird in Schritt 11 ein anfahrtypisches "Einsacken" des Kraftfahrzeuges ermittelt. Wie in Fig. 2 durch die gestrichelten Linien angedeutet, kann der Schritt 11, anstatt die Schritte 8, 9 und 10 zu ersetzen, nach diesen Schritten durchgeführt werden.

In einem optionalen Schritt 12 können weitere Parameter/Größen erfasst werden, die angeben, ob das Kraftfahrzeug tatsächlich aus dem Stillstand bewegt werden kann und/oder darf. Einem Anfahren des Kraftfahrzeuges steht beispielsweise eine mittels der Sensoreinrichtung 22 detektierte Betätigung des Bremspedals 24 und/oder des Bremspedalschalters 26 entgegen. Auch über die Schnittstelle 54 bereitgestellte Informationen können derartige Betriebszustände wiedergeben. So sollte beispielsweise das Anfahren des Kraftfahrzeuges unterbleiben, wenn das Motormanagementsystem, das Antiblockiersystem oder Systeme zur Traktions- und Stabilitätskontrolle fehlerhaft arbeiten, einer der Reifen einen zu geringen oder gar keinen Luftdruck aufweist, zum Betrieb des Kraftfahrzeugs erforderliche Mindestmengen der Betriebsstoffe unterschritten sind und dergleichen.

Außerdem kann hierbei der Zustand der Sensoren 12 für Fahrzeugtürschalter und der Sicherheitseinrichtung 14 überprüft werden, wobei ein Anfahren zulässig ist, wenn alle Türen geschlossen und die Gurtsysteme der belegten Sitze aktiviert sind. Hierbei ist allerdings darauf zu achten, dass ein Anfahren des Kraftfahrzeuges auch bei geöffneten fahren des Kraftfahrzeuges auch bei geöffneten Fahrzeugtüren erwünscht ist, wenn beispielsweise beim Einparken die Fahrertür geöffnet ist oder sperrige Objekte bei geöffneter Kofferraumtür transportiert werden. Auch die Überprüfung der Gurtsysteme kann dazu führen, dass in unerwünschter Weise ein Anfahren verhindert wird, wenn sich beispielsweise auf einem Sitz ein Gegenstand befindet, der die Sitzbelegungserkennung aktiviert.

Des weiteren ist hinsichtlich des Schrittes 12 zu berücksichtigen, dass die dort durchführbaren Überprüfungen von anderen Steuer- und Kontrolleinrichtungen des Kraftfahrzeuges durchgeführt werden können.

Sind die Schritte 1 bis 12 in einer der erläuterten Abfolgen erfolgreich durchlaufen, wird in Schritt 13 die Bremsausrüstung 6 über die Schnittstelle 4 von der Steuereinrichtung 2 so gesteuert, dass die im Stillstand erzeugten Bremskräfte, vorteilhafter Weise in Abhängigkeit von in den vorherigen Schritten erfassten Parametern/Größen, abgebaut werden.

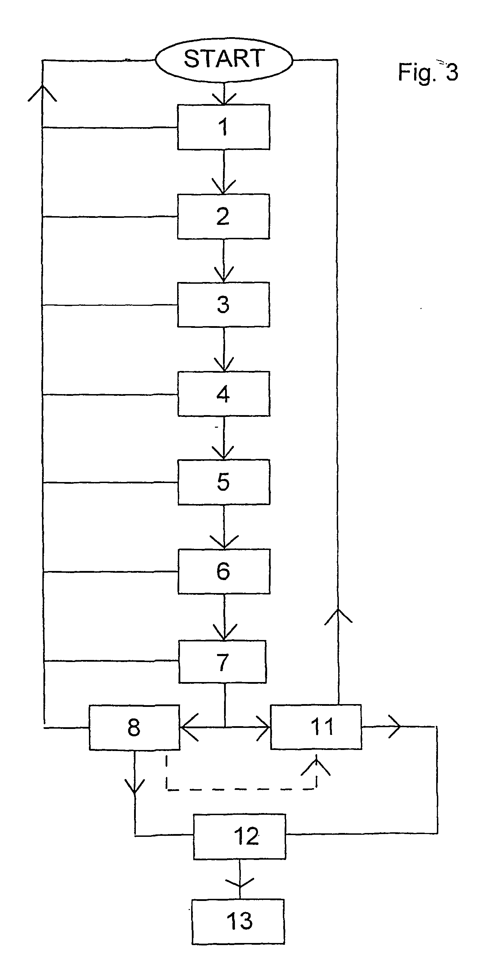

Bezugnehmend auf Fig. 3 wird der Betrieb des Systems 1 zur Anfahrsteuerung bei einem automatischen oder einem halbautomatischen Getriebe beschrieben.

Bei den Schritten, die zur Überprüfung der Grundvoraussetzungen für den Betrieb des Systems 1 dienen, entsprechen die Schritte 1, 2 und 3 von Fig. 3 den Schritten 1, 2 und 3 gemäß Fig. 2. Demgegenüber wird in Schritt 4 von Fig. 3 ein Kupplungsschalter (nicht gezeigt) überprüft.

Die Schritte 5, 6 und 7 zur Erkennung eines Anfahrwunsches eines Fahrzeugführers entsprechen hier den im Zusammenhang mit einem Schaltgetriebe erläuterten Schritten 5, 6 und 7.

Aufgrund der Wirkungsweise eines automatischen oder eines halbautomatischen Getriebes, werden in diesen Fällen bei der Steuerung des Systems 1 die Schritte 9 und 10 gemäß Fig. 2 weggelassen. Folglich wird bei dem Betrieb des Systems 1 gemäß Fig. 3 der Schritt 8 durchgeführt, in dem überprüft wird, ob der aktuelle Betriebszustand des Motors 40 tatsächlich geeignet ist, um das Kraftfahrzeug aus dem Stillstand in einen Fahrzustand zu bringen. Hierbei entspricht die Durchführung des Schrittes 8 von Fig. 3 der des Schrittes 8 gemäß Fig. 2.

Diese Vorgehensweise ist darauf zurückzuführen, dass bei einem automatischen oder einem halbautomatischen Getriebe eine Übertragungsfunktion erwartet wird, die den Zusammenhang zwischen Stellungen und/oder Bewegungen des Gaspedals und den Antriebsrädern beschreibt. Diese Übertragungsfunktion wird erreicht, wenn gemäß Schritt 8 das zum Anfahren des Kraftfahrzeuges erforderliche Motordrehmoment erreicht ist.

Vergleichbar zu dem Betrieb des Systems 1 gemäß Fig. 2 ist es hier auch vorgesehen, den oben erläuterten Schritt 11 optional oder ergänzend durchzuführen.

Danach kann der oben beschriebene optionale Schritt 12 durchgeführt werden. In Schritt 13 wird dann, wie oben ausgeführt, die Bremsausrüstung 6 zum Anfahren des Kraftfahrzeuges gesteuert, falls die zuvor durchgeführten Schritte erfolgreich abgeschlossen wurden.

## Patentansprüche

1. Verfahren zur Anfahrunterstützung eines Kraftfahrzeuges mit einer im Stillstand aktivierten Bremsausrüstung (6), mit folgenden Schritten:
- Ermitteln von Anfahrparametern, die einen Betriebszustand des Kraftfahrzeuges charakterisieren, in dem das Kraftfahrzeug aus einem Stillstandszustand in einen Fahrzustand gebracht werden soll,
- Ermitteln von aktuellen Betriebszuständen des Kraftfahrzeuges, bis ein Betriebszustand ermittelt wird, der durch eine Wirkverbindung zwischen einem Motor (40) und Antriebsrädern des Kraftfahrzeuges verursacht wird, und
- Steuern einer im Stillstandszustand aktivierten Bremsausrüstung (6) zum Abbau der im Stillstandszustand erzeugten Bremskräfte, um ein Anfahren des Kraftfahrzeuges zuzulassen,
**dadurch gekennzeichnet, dass**
- das Ermitteln von aktuellen Betriebszuständen solange durchgeführt wird, bis ein Betriebszustand ermittelt wird, bei dem sich eine aktuelle Neigung des Kraftfahrzeuges gegenüber einer Neigung des Kraftfahrzeuges im Stillstandszustand um einen vorgegebenen Wert verändert hat.

2. Verfahren gemäß Anspruch 1, mit folgenden Schritten:
- Festlegen eines Ausgangsbetriebszustandes für den Stillstandszustand, der vor dem Ermitteln der Anfahrparameter vorliegen muss, und
- Ermitteln von aktuellen Betriebszuständen des Kraftfahrzeuges im Stillstandszustand, bis ein Betriebszustand ermittelt wird, der dem Ausgangsbetriebszustand entspricht.

3. Verfahren gemäß Anspruch 2, bei dem
- beim Festlegen des Ausgangsbetriebszustandes ein Betriebszustand festgelegt wird, bei dem eine Zündanlage (10) aktiviert ist, und/oder die Fahrzeuggeschwindigkeit gleich Null ist, und/oder die Bremsausrüstung (6) Bremskräfte erzeugt.

4. Verfahren gemäß Anspruch 2 oder 3, bei dem
- beim Festlegen des Ausgangsbetriebszustandes ein Betriebszustand festgelegt wird, in dem ein Kupplungspedal (30), und/oder ein Kupplungspedalschalter (32), und/oder ein Kupplungsschalter betätigt ist.

5. Verfahren gemäß einem der vorhergehenden Ansprüche, bei dem
- beim Ermitteln der Anfahrparameter wenigstens einer der Parameter ermittelt wird, die angeben, dass ein Gaspedal (18) betätigt ist, und/oder eine aktuelle Drehzahl des Motors (40) größer als eine vorgegebene Drehzahl des Motors (40) im Leerlauf ist, und/oder ein gewünschtes Motordrehmoment größer als das aktuelle Motordrehmoment ist, und/oder das aktuelle Motordrehmoment größer als ein für den Leerlauf des Motors (40) vorgegebenes Leerlaufdrehmoment ist.

6. Verfahren gemäß einem der vorhergehenden Ansprüche, bei dem
- beim Ermitteln der Anfahrparameter wenigstens einer der Parameter ermittelt wird, die angeben, dass ein Gaspedalschalter (20) betätigt ist, und/oder das Gaspedal (18) dynamisch betätigt ist, und/oder eine aktuelle Änderung des Motordrehmomentes größer Null ist.

7. Verfahren gemäß einem der vorhergehenden Ansprüche, bei dem
- das Ermitteln der Anfahrparameter solange durchgeführt wird, bis wenigstens einer der Anfahrparameter einen Betriebszustand charakterisiert, der sich vom Betriebszustand des Kraftfahrzeuges im Stillstandszustand unterscheidet.

8. Verfahren gemäß einem der vorhergehenden Ansprüche, bei dem
- beim Ermitteln von aktuellen Betriebszuständen ein aktuelles Motordrehmoment, und/oder eine aktuelle Änderung des Motordrehmomentes und/oder eine Änderung eines gewünschten Motordrehmomentes, und/oder eine zeitlich gemittelte Änderung eines aktuellen Motordrehmomentes ermittelt wird.

9. Verfahren gemäß Anspruch 8, bei dem
- das Ermitteln von Betriebszuständen solange durchgeführt wird, bis das aktuelle Motordrehmoment größer als eine Verknüpfung eines für den Leerlauf des Motors (40) vorgegebenen Motordrehmomentes und eines Korrekturfaktors ist, und/oder die aktuelle Änderung des Motordrehmomentes und/oder die aktuelle Änderung des gewünschten Motordrehmomentes größer Null ist, und/oder die aktuelle zeitlich gemittelte Änderung des Motordrehmomentes während einer vorgegebenen Zeitperiode in einem vorgegebenen Bereich liegt.

10. Verfahren gemäß einem der vorhergehenden Ansprüche, bei dem
- das Steuern der Bremsausrüstung (6) in Abhängigkeit eines Betriebszustandes der Bremsausrüstung (6) im Stillstandszustand, und/oder der ermittelten Anfahrparameter, und/oder des ermittelten aktuellen Betriebszustandes, und/oder eines aktuellen Betriebszustandes beim Steuern der Bremsausrüstung (6) durchgeführt wird.

11. Verfahren gemäß einem der vorhergehenden Ansprüche, bei dem
- beim Steuern der Bremsausrüstung (6) der aktuelle Betriebszustand des Kraftfahrzeuges in Abhängigkeit eines Betriebszustandes der Bremsausrüstung (6) im Stillstandszustand, und/oder der ermittelten Anfahrparameter, und/oder des ermittelten aktuellen Betriebszustandes, und/oder eines aktuellen Betriebszustandes beim Steuern der Bremsausrüstung (6) gesteuert wird.

12. Verfahren gemäß Anspruch 11, bei dem
- beim Steuern der Bremsausrüstung (6) eine aktuelle Drehzahl und/oder ein aktuelles Drehmoment des Motors (40) gesteuert wird.

13. System zur Anfahrunterstützung eines Kraftfahrzeuges mit einer im Stillstand aktivierten Bremsausrüstung (6), mit:
- einer Steuereinrichtung (2) und
- Erfassungseinrichtungen (8, 16, 22, 28, 34, 38, 42, 44, 46, 48, 54) zur Erfassung von Betriebszustände des Kraftfahrzeuges charakterisierenden Parametern und eine Schnittstelle (4) zur Steuerung der Bremsausrüstung (6), wobei die Steuereinrichtung (2) ausgelegt ist, gemäß einem der Verfahren nach einem der Ansprüche 1 bis 13 betrieben zu werden.

14. Computerprogrammprodukt, mit:
- Programmcodeteilen zum Ausführen der Schritte gemäß einem der Ansprüche 1 bis 12.

15. Computerprogrammprodukt gemäß Anspruch 14, gespeichert auf einem computerlesbaren Aufzeichnungsmedium oder in einer computerlesbaren Aufzeichnungsvorrichtung.

## Claims

1. Method of assisting the driveaway of a motor vehicle having a braking equipment (6) activated in a standstill condition, comprising the following steps:
- determination of driveaway parameters characterizing an operating condition of the motor vehicle in which the motor vehicle is to be brought from a standstill condition into a driving condition,
- determination of current operating conditions of the motor vehicle until an operating condition is determined which is caused by an active connection between an engine (40) and driving wheels of the motor vehicle, and
- control of braking equipment (6) which is activated in the standstill condition so as to reduce braking forces generated in the standstill condition in order to allow driveaway of the motor vehicle,
**characterized in that**
- the determination of current operating conditions is effected until determining an operating condition in which a current inclination of the motor vehicle has varied by a defined value relative to an inclination of the motor vehicle in the standstill condition.

2. Method according to claim 1, comprising the following steps:
- defining an initial operating condition for the standstill condition, which has to exist prior to the determination of the driveaway parameters, and
- determining current operating conditions of the motor vehicle in the standstill condition until an operating condition is determined which corresponds to the initial operating condition.

3. Method according to claim 2, wherein
when defining the initial operating condition, an operating condition is defined by an ignition system (10) being activated, and/or the vehicle velocity being equal to zero, and/or the braking equipment (6) generating braking forces.

4. Method according to claim 2 or 3, wherein
when defining the initial operating condition, an operating condition is defined by a clutch pedal (30), and/or a clutch pedal switch (32), and/or a clutch switch being actuated.

5. Method according to one of the foregoing claims, wherein determination of the driveaway parameters includes determining at least one of the parameters indicating that an accelerator pedal (18) is actuated, and/or a current rotational speed of the engine (40) is higher than a defined rotational speed of the engine (40) during no-load operation, and/or a requested engine torque is higher than the current engine torque, and/or the current engine torque is higher than an idling torque defined for no-load operation of the engine (40).

6. Method according to one of the foregoing claims, wherein determination of the driveaway parameters includes determining at least one of the parameters indicating that an accelerator pedal switch (20) is actuated, and/or the accelerator pedal (18) is dynamically actuated, and/or a current change of the engine torque is greater than zero.

7. Method according to one of the foregoing claims, wherein the determination of the driveaway parameters is effected until at least one of the driveaway parameters characterizes an operating condition which differs from the operating condition of the motor vehicle in the standstill condition.

8. Method according to one of the foregoing claims, wherein when determining current operating conditions, a current engine torque, and/or a current change of the engine torque, and/or a change of a requested engine torque, and/or a time-averaged change of a current engine torque is determined.

9. Method according to claim 8, wherein the determination of operating conditions is effected until the current engine torque is higher than a combination of an engine torque which is defined for no-load operation of the engine (40) and a correction factor, and/or the current change of the engine torque and/or the current change of the requested engine torque is greater than zero, and/or the current time-averaged change of the engine torque during a defined period of time lies within a defined range.

10. Method according to one of the foregoing claims, wherein the control of the braking equipment (6) is effected in response to an operating condition of the braking equipment (6) in the standstill condition, and/or the determined driveaway parameters, and/or the determined current operating condition, and/or a current operating condition when controlling the braking equipment (6).

11. Method according to one of the foregoing claims, wherein when controlling the braking equipment (6), the current operating condition of the motor vehicle is controlled in response to an operating condition of the braking equipment (6) in the standstill condition, and/or the determined driveaway parameters, and/or the determined current operating condition, and/or a current operating condition when controlling the braking equipment (6).

12. Method according to claim 11, wherein when controlling the braking equipment (6), a current rotational speed and/or a current torque of the engine (40) is controlled.

13. System for assisting the driveaway of a motor vehicle having a braking equipment (6) activated in a standstill condition, comprising:
- a control device (2), and
- detection devices (8, 16, 22, 28, 34, 38, 42, 44, 46, 48, 54) for detecting parameters characterizing operating conditions of the motor vehicle, and an interface (4) for control of the braking equipment (6), wherein the control device (2) is designed to be operated according to one of the methods defined in one of claims 1 to 13 (müsste hier 12 heißen).

14. Computer program product comprising program code portions for carrying out the steps according to one of claims 1 to 12.

15. Computer program product according to claim 14 stored on a computer readable recording medium or in a computer readable recording apparatus.

## Revendications

1. Procédé d'assistance au démarrage d'un véhicule automobile présentant un dispositif de freinage (6) activé à l'arrêt, comprenant les étapes suivantes :
- détermination de paramètres de démarrage caractérisant un état de fonctionnement du véhicule automobile, dans lequel le véhicule automobile doit passer d'un état d'arrêt à un état de conduite,
- détermination d'états de fonctionnement actuels du véhicule automobile jusqu'à ce que soit déterminé un état de fonctionnement provoqué par une liaison fonctionnelle entre un moteur (40) et les roues d'entraînement du véhicule automobile, et
- commande d'un dispositif de freinage (6) activé à l'état d'arrêt pour faire disparaître les forces de freinage produites à l'état d'arrêt afin de permettre le démarrage du véhicule automobile,
**caractérisé en ce que**
- il est procédé à la détermination d'états de fonctionnement actuels jusqu'à ce qu'il soit déterminé un état de fonctionnement, dans lequel une inclinaison actuelle du véhicule automobile se voit modifiée d'une valeur prédéfinie par rapport à une inclinaison du véhicule automobile à l'état d'arrêt.

2. Procédé selon la revendication 1, comprenant les étapes suivantes :
- détermination d'un état de fonctionnement de départ pour l'état d'arrêt, lequel doit être donné en amont de la détermination des paramètres de démarrage, et
- détermination d'états de fonctionnement actuels du véhicule automobile à l'état d'arrêt jusqu'à ce que soit déterminé un état de fonctionnement qui corresponde à l'état de fonctionnement de départ.

3. Procédé selon la revendication 2, dans le cadre duquel
- il est, lors de la détermination de l'état de fonctionnement de départ, déterminé un état de fonctionnement, dans lequel une installation d'allumage (10) est activée, et/ou la vitesse du véhicule automobile est égale à zéro, et/ou le dispositif de freinage (6) produit des forces de freinage.

4. Procédé selon la revendication 2 ou 3, dans le cadre duquel
- il est, lors de la détermination de l'état de fonctionnement de départ, déterminé un état de fonctionnement, dans lequel une pédale d'embrayage (30), et/ou un contacteur de pédale d'embrayage (32), et/ou un contacteur d'embrayage sont actionnés.

5. Procédé selon l'une des revendications précédentes, dans le cadre duquel
- il est, lors de la détermination des paramètres de démarrage, déterminé au moins un des paramètres indiquant qu'une pédale d'accélérateur (18) est actionnée, et/ou un régime actuel du moteur (40) est supérieur à un régime prédéfini pour le moteur (40) au ralenti, et/ou un couple moteur souhaité est supérieur au couple moteur actuel, et/ou le couple moteur actuel est supérieur à un couple moteur prédéfini pour le moteur (40) au ralenti.

6. Procédé selon l'une des revendications précédentes, dans le cadre duquel
- il est, lors de la détermination des paramètres de démarrage, déterminé au moins un des paramètres indiquant qu'un contacteur de pédale d'accélérateur (20) est actionné, et/ou une modification actuelle du couple moteur est supérieure à zéro.

7. Procédé selon l'une des revendications précédentes, dans le cadre duquel
- il est procédé à la détermination des paramètres de démarrage jusqu'à ce qu'au moins un des paramètres de démarrage caractérise un état de fonctionnement qui se distingue de l'état de fonctionnement du véhicule automobile à l'état d'arrêt.

8. Procédé selon l'une des revendications précédentes, dans le cadre duquel
- il est, lors de la détermination d'états de fonctionnement actuels, déterminé un couple moteur actuel, et/ou une modification actuelle du couple moteur, et/ou une modification d'un couple moteur souhaité, et/ou une modification moyennée dans le temps d'un couple moteur actuel.

9. Procédé selon la revendication 8, dans le cadre duquel
- il est procédé à la détermination d'états de fonctionnement jusqu'à ce que le couple moteur actuel soit supérieur à une combinaison d'un couple moteur prédéfini pour le ralenti du moteur (40) et d'un facteur de rectification, et/ou la modification actuelle du couple moteur et/ou la modification actuelle du couple moteur souhaité est supérieur à zéro, et/ou la modification actuelle moyennée dans le temps du couple moteur se situe pendant une période de temps prédéfinie dans une plage prédéfinie.

10. Procédé selon l'une des revendications précédentes, dans le cadre duquel
- la commande du dispositif de freinage (6) est opérée en fonction d'un état de fonctionnement du dispositif de freinage (6) à l'état d'arrêt, et/ou des paramètres de démarrage déterminés, et/ou de l'état de fonctionnement actuel déterminé, et/ou d'un état de fonctionnement actuel lors de la commande du dispositif de freinage (6).

11. Procédé selon l'une des revendications précédentes, dans le cadre duquel
- lors de la commande du dispositif de freinage (6), l'état de fonctionnement actuel du véhicule automobile est commandé en fonction d'un état de fonctionnement du dispositif de freinage (6) à l'état d'arrêt, et/ou des paramètres de démarrage déterminés, et/ou de l'état de fonctionnement actuel déterminé, et/ou d'un état de fonctionnement actuel lors de la commande du dispositif de freinage (6).

12. Procédé selon la revendication 11, dans le cadre duquel
- un régime actuel et/ou un couple moteur actuel du moteur (40) sont commandés lors de la commande du dispositif de freinage (6).

13. Système d'assistance au démarrage d'un véhicule automobile présentant un dispositif de freinage (6) activé à l'arrêt, comprenant :
- un dispositif de commande (2) et
- des dispositifs de saisie (8, 16, 22, 28, 34, 38, 42, 44, 46, 48, 54) pour la saisie des paramètres caractéristiques des états de fonctionnement du véhicule automobile et une interface (4) pour la commande du dispositif de freinage (6), le dispositif de commande (2) étant conçu pour fonctionner selon l'un des procédés selon l'une des revendications précédentes 1 à 13.

14. Produit de programme d'ordinateur, comprenant :
- des parties de code de programme pour la réalisation des étapes selon l'une des revendications 1 à 12.

15. Produit de programme d'ordinateur selon la revendication 14, enregistré sur un support d'enregistrement lisible par ordinateur ou dans un dispositif d'enregistrement lisible par ordinateur.
